# EUROPEAN PATENT APPLICATION

(11) **EP 2 187 090 A1**
(43) Date of publication of application: **19.05.2010**
(21) Application number: 08790356.3
(22) Date of filing: 01.08.2008
(51) Int. Cl.: F16G 5/16, F16G 5/00

(54) **V-BELT FOR HIGH LOAD POWER TRANSMISSION**

(30) Priority: 07.08.2007 JP 2007205267
(71) Applicant: Bando Chemical Industries, Ltd., Kobe-shi, Hyogo 652-0883 (JP)
(72) Inventor: SANO, Kouhei, Kobe-shi Hyogo 652-0883 (JP); SAKANAKA, Hiroyuki, Kobe-shi Hyogo 652-0883 (JP)
(74) Representative: Martin, Didier Roland Valéry
(86) International application number: PCT/JP2008/002092
(87) International publication number: WO 2009/019849

(57) **Abstract**

A V-belt for high load power transmission produces less noise when it runs and has blocks with increased impact resistance. The V-belt (B) includes at least one tension belt (10) endlessly extending in a ring shape and also includes the blocks (20) engaged and fixed to place at predetermined pitches in the longitudinal direction of the tension belt (10). The blocks (20) each have contact surfaces (30) located at opposite ends in the lateral direction of the V-belt and coming into contact with a pulley. On the opposite ends of each block (20), there are tilt surface (31) formed to continue from the contact surfaces (30) to the inner peripheral side of the V-belt and tilting relative to the contact surfaces (30) toward the center in the lateral direction of the V-belt. The angle of each tilt surface (31) relative to a corresponding contact surface (30) is set not less than 120 degrees but not more than 140 degrees.

## Description

### TECHNICAL FIELD

The present invention relates to a high-load drive V-belt.

### BACKGROUND ART

In recent years, belt-type continuously variable transmissions have been developed as driving transmissions for agricultural machines such as combines and tractors and automobiles, etc., in order to, for example, improve the operability when shifting gears and the fuel consumption efficiency. A belt-type continuously variable transmission includes a V-belt wrapped around transmission pulleys provided on a drive shaft and a driven shaft with a variable gap interval therebetween. That is, the belt-type continuously variable transmission is capable of continuously changing the speed by changing the gap interval between the transmission pulleys.

As the V-belt to be wrapped around the belt-type continuously variable transmission, a high-load drive V-belt is known in the art, which includes at least one tension band extending in an endless loop, and a plurality of blocks engaged and secured to the tension band at a predetermined pitch in a belt length direction of the tension band. The plurality of blocks each include contact surfaces to be in contact with a pulley formed in contact portions which are opposite end portions of the block in the belt width direction.

The high-load drive V-belt provides power transmission, with the contact surface of the block receiving the rotational force of the pulley by contacting the pulley groove surface, and transferring the force received by the block at the contact surface from the pulley as a driving force to the tension band. Typically, in order to improve the power transmission property by efficiently transferring the rotational force of the pulley as a driving force to the tension band, the contact portion of the block is formed by a resin having a relatively high modulus of elasticity.

With a V-belt of such a configuration, when the belt enters a pulley, the tension band located along the pitch line of the belt enters the pulley groove surface without slipping thereon, and the blocks also enter at the same speed as the tension band. Then, there will be a speed difference with respect to the pulley groove surface between the inner side portion of the block which is on the belt inner side of the tension band and the outer side portion of the block which is on the belt outer side of the tension band.

That is, since a pulley has a higher circumferential velocity further away from the center of rotation thereof, the block receives a backward force in the belt traveling direction at the inner side portion located closer to the center of rotation than the tension band, and receives a forward force in the belt traveling direction at the outer side portion located more outwardly in the radius direction of the pulley than the tension band, thus slipping against the pulley groove surface. Also when a block exits the pulley, the block slips similarly as when entering the pulley. Thus, the contact surface of a block wears gradually as the block slips against the pulley groove surface.

Typically, the dimension of the contact portion of each block in the thickness direction in a cross section parallel to the pulley groove surface is not constant in the direction perpendicular to the pulley groove surface, but increases (becomes thicker) toward the center in the belt width direction. Therefore, when the contact surface wears by the contact with the pulley groove surface, the area of the contact surface increases gradually. Such an increase in the area of the contact surface increases the speed difference between the belt inner side and the belt outer side of the contact portion with respect to the pulley groove surface, thereby increasing the noise of the belt running.

In contrast, in the V-belt of Patent Document 1, protruding portions are provided on opposite sides of the block in the belt width direction, each protruding portion extending in the direction perpendicular to the pulley groove surface and having a generally constant length in the groove depth direction along the pulley groove surface, and the contact surface is formed at the tip of the protruding portion. This suppresses the increase in the contact area of the block as the belt runs.

### CITATION LIST

### PATENT DOCUMENT

PATENT DOCUMENT 1: Japanese Patent Publication No. H10-176735

### SUMMARY OF THE INVENTION

### TECHNICAL PROBLEM

However, the V-belt wrapped around the pulleys is being pulled toward the bottom side in the depth direction of the pulley groove by the tension of the belt, and therefore there is a particularly large load from the pulley on the corner portion on the belt inner side (hereinafter referred to also as the "inner corner portion") of the contact portion of the block. Therefore, the inner corner portion is likely to become sharpened with the contact surface wearing as the belt runs.

Therefore, even with a V-belt having such a configuration of Patent Document 1, the inner corner portion may become sharpened as the belt runs as described above. Then, if a block enters a pulley while being tilted even slightly or if the angle of the pulley groove surface changes due to a damage to the pulley, etc., the inner corner portion is likely to chip off due to the shock occurring when the block enters the pulley, thus shortening the lifetime of the belt.

The present invention has been made in view of these problems, and has an object to improve the shock resistance of the block and the durability of the belt while reducing the noise of the belt running.

### SOLUTION TO THE PROBLEM

In order to achieve the object set forth above, in the present invention, the angle between a contact surface and a slope in a block of a high-load drive V-belt formed so as to be continuous with a belt inner side of the contact surface is set to 120 degrees or more and 140 degrees or less.

Specifically, the first invention is directed to a high-load drive V-belt including: at least one tension band extending in an endless loop; and a plurality of blocks engaged and secured to the tension band at a predetermined pitch in a belt length direction of the tension band, wherein each of the plurality of blocks includes a contact surface to be in contact with a pulley on each of opposite end portions of the block in a belt width direction.

Each of the plurality of blocks includes a slope formed so as to be continuous with a belt inner side of the contact surface and inclined toward a center in the belt width direction with respect to the contact surface, and an angle of the slope with respect to the contact surface is 120 degrees or more and 140 degrees or less.

It is preferred that the angle of the slope is 130 degrees or more and 140 degrees or less (the second invention).

The opposite end portions in the belt width direction of each of the plurality of blocks may be formed by a phenol resin (the third invention).

### Functions

If the angle of the slope with respect to the contact surface of the block of the high-load drive V-belt is smaller than 120 degrees, the strength will be relatively low at corner portions on the belt inner side (the inner corner portions) at the opposite end portions of the block (contact portions) having the contact surfaces. Therefore, if there occurs a change in the angular relationship between the contact surface and the pulley groove surface because of the block tilting even slightly, for example, the inner corner portion is likely to chip off due to the shock occurring when the block enters the pulley, thus lowering the shock resistance of the block.

On the other hand, if the angle of the slope with respect to the contact surface is larger than 140 degrees, since the block has a shape that is relatively widened in the belt thickness direction toward the center in the belt width direction, the area of the contact surface formed on the belt inner side of the block increases through the wear of the contact surface as the belt runs. As a result of such an increase in the area of the contact surface, the speed difference between the belt inner side and the belt outer side of the contact portion with respect to the pulley groove surface is increased, thereby increasing the noise of the belt running.

In contrast, in a high-load drive V-belt of the present invention, the angle of the slope with respect to the contact surface of the block is set to 120 degrees or more and 140 degrees or less. Thus, it is possible to suppress the increase in the contact surface on the belt inner side through the wear of the contact surface, and to improve the strength of the inner corner portion, thereby reducing the noise of the belt running, and improving the shock resistance of the block and the durability of the belt.

Particularly, if the angle of the slope is 130 degrees or more and 140 degrees or less, it is possible to further increase the strength of the inner corner portion of the block, and it is therefore possible to further increase the shock resistance of the block.

### ADVANTAGES OF THE INVENTION

According to the present invention, since the angle of the slope with respect to the contact surface of the block of the high-load drive V-belt is 120 degrees or more and 140 degrees or less, it is possible to suppress the increase in the contact surface on the belt inner side through the wear of the contact surface, and to improve the strength of the corner portion on the belt inner side at an end portion of the block including the contact surface. Therefore, it is possible to reduce the noise of the belt running, and to improve the shock resistance of the block and the durability of the belt.

### BRIEF DESCRIPTION OF THE DRAWINGS

FIG. 1 is a perspective view generally showing a configuration of a portion of a high-load drive V-belt according to an embodiment of the present invention.
FIG. 2 is a front view generally showing a configuration of a block of the high-load drive V-belt.
FIG. 3 is an enlarged view showing the area A of FIG. 2.
FIG. 4 is a view generally showing a configuration of a lateral pressure resistance test apparatus.
FIG. 5 is a diagram schematically showing a configuration of a noise test apparatus.
FIG. 6 is a diagram schematically showing a configuration of a high-speed durability test apparatus.
FIG. 7 shows measurement results, measured in a first example, of the block lateral pressure resistance, the noise, the high-speed endurance lifetime and the contact surface increment for each V-belt.
FIG. 8 is a graph showing the change of the block lateral pressure resistance with respect to the angular difference between the slope and the contact surface.

### DESCRIPTION OF REFERENCE CHARACTERS

- B: High-load drive V-belt (V-belt)
- 10: Tension band
- 20: Block
- 30: Contact surface
- 31: Slope

### DESCRIPTION OF EMBODIMENTS

An embodiment of the present invention will now be described with reference to the drawings. Note that the present invention is not limited to the following embodiment.

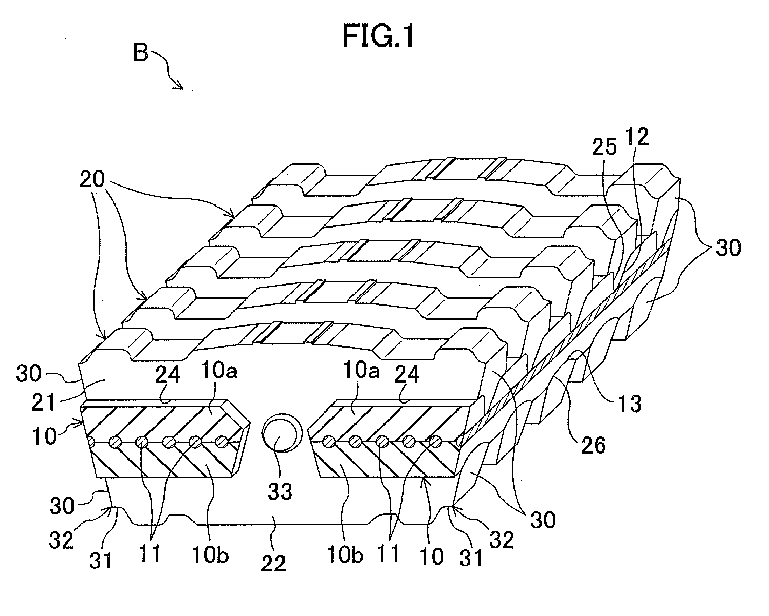

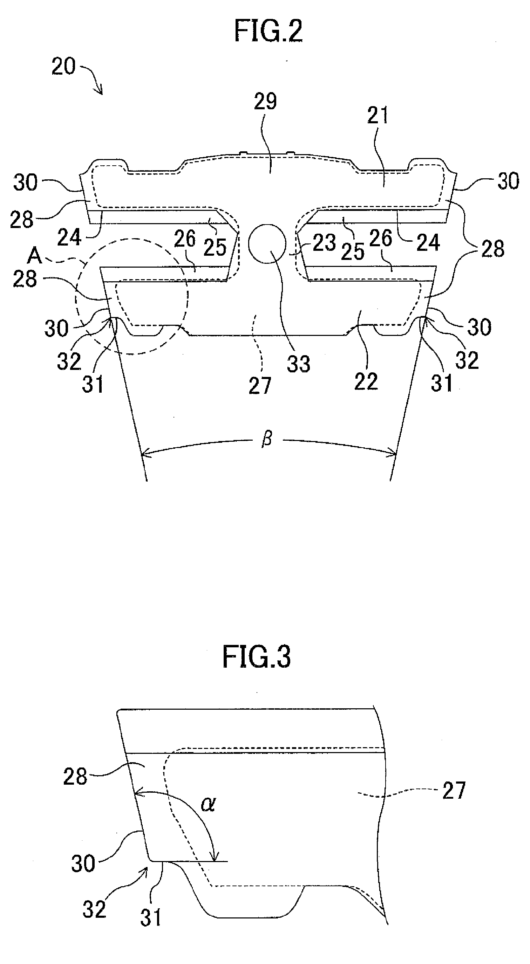

FIGS. 1-3 show a configuration of a high-load drive V-belt according to the embodiment of the present invention. That is, FIG. 1 is a perspective view generally showing a configuration of a portion of the high-load drive V-belt B. FIG. 2 is a front view generally showing a configuration of a block 20 of the high-load drive V-belt. FIG. 3 is an enlarged view showing the area A of FIG. 2.

As shown in FIG. 1, the high-load drive V-belt (hereinafter also referred to simply as a "V-belt") B includes a pair of tension bands 10 each extending in an endless loop, and a plurality of blocks 20 engaged and secured thereto at a predetermined pitch in the belt length direction of the pair of tension bands 10 with the pair of tension bands 10 arranged side-by-side in the belt width direction.

The pair of tension bands 10 each include an outer rubber layer 10a and an inner rubber layer 10b provided on the belt outer side and on the belt inner side, respectively, so as to extend side-by-side in the belt length direction, and a plurality of cores 11 provided between the outer rubber layer 10a and the inner rubber layer 10b.

The outer rubber layer 10a includes an outer fabric layer (not shown) provided integral with the outer rubber layer 10a on the surface of the belt outer side. On the other hand, the inner rubber layer 10b includes an inner fabric layer (not shown) provided integral with the inner rubber layer 10b on the surface of the belt inner side. The outer rubber layer 10a and the inner rubber layer 10b are made of, for example, a hard rubber material, or the like, containing a short fiber of an aramid fiber, a nylon fiber, or the like, in a hydrogenated nitrile rubber (H-NBR) mixed with zinc methacrylate.

The plurality of cores 11 are arranged at a predetermined interval in the belt width direction while extending in the belt length direction. Each core 11 is formed by, for example, an aramid fiber, or the like, and has a relatively high strength and a relatively high modulus of elasticity.

A plurality of outer grooves 12 arranged at a predetermined interval in the belt length direction while extending in the belt width direction to form a U-shaped cross section are formed, as the outer receiving portions, on the surface of the belt outer side of the tension band 10. On the other hand, a plurality of inner grooves 13 extending in the belt width direction to form an arc-shaped cross section are formed, as the inner receiving portions, on the surface of the belt inner side of the tension band 10. Note that these inner grooves 13 are formed at a predetermined interval at positions opposing the outer grooves 12 in the belt thickness direction.

As shown in FIG. 2, the plurality of blocks 20 are formed so that each block has a generally H-letter shape as viewed from the surface (front surface) opposing an adjacent block 20. That is, each block 20 includes an outer beam portion (outer side portion) 21 forming the belt outer surface, an inner beam portion (inner side portion) 22 forming the belt inner surface, and a center pillar portion 23 provided between the outer beam portion 21 and the inner beam portion 22 for connecting between the outer beam portion 21 and the inner beam portion 22.

That is, the outer beam portion 21 and the inner beam portion 22 are each formed so that the dimension thereof in the belt width direction is larger than the dimension of the center pillar portion 23 in the belt width direction. The center pillar portion 23 is provided so as to connect together the central portion of the outer beam portion 21 in the belt width direction and the central portion of the inner beam portion 22 in the belt width direction.

Then, on the opposite sides of the center pillar portion 23 in the belt width direction, a pair of slit-shaped fitting portions 24 that open outwardly in the belt width direction and are defined by the outer beam portion 21 and the inner beam portion 22. The tension band 10 is pressed into each of the pair of fitting portions 24, thereby fitting the tension bands 10 into the blocks 20.

That is, the fitting portion 24 includes, as the outer mating portions, outer rib portions 25 on the wall surface on the belt outer side, which are ribs mating with the outer grooves 12 of the tension bands 10, and includes, as the inner mating portions, inner rib portions 26 on the wall surface on the belt inner side, which are ribs mating with the inner grooves 13 of the tension bands 10. The outer rib portions 25 and the inner rib portions 26 are provided at positions opposing each other in the belt thickness direction. Thus, the outer rib portions 25 mate with the outer grooves 12 and the inner rib portions 26 mate with the inner grooves 13 so that the plurality of blocks 20 are engaged and secured to the tension bands 10 in the belt length direction.

Each block 20 includes a reinforcing member 27, and the contact portions 28 formed by a resin on both sides of the reinforcing member 27 in the belt width direction. That is, the end portions of each block 20 on both sides thereof are each formed by the contact portion 28.

Each block 20 includes the reinforcing member 27 buried in a resin member, by insert molding, for example, so as to be positioned generally at the center of the block 20. That is, each block 20 includes a resin portion 29 formed by a phenol resin, or the like, for example, and the reinforcing member 27 buried in the resin portion 29. The reinforcing member 27 is formed by an aluminum alloy, or the like, for example, and is formed in a generally H-letter shape which is generally equal to the outline shape of the block 20. The resin portion 29 is formed so as to cover the entire surface or generally the entire surface of the reinforcing member 27.

Note that the phenol resin is, for example, a novolac-, resol- or benzilic ether-type phenol resin, or the like, and these phenol resins may be either modified or unmodified. The modified phenol resin may be, for example, an alkyl-modified phenol resin, a tall oil-modified phenol resin, or the like. More preferably, it may be, for example, a phenol resin modified with a cardol, or the like, i.e., a cashew oil, or at least one of a cardol, an anacardic acid and a cardanol contained in a cashew oil. Each of the phenol resins may be used solely or in combination with others. Particularly, where an unmodified phenol resin and a phenol resin modified with a cardol, or the like, are used in combination, the mixing ratio therebetween may be selected appropriately.

The outer beam portion 21 and the inner beam portion 22 are obtained by covering the entire surface of the opposite sides of the reinforcing member 27 in the belt width direction with the resin portion 29. In other words, the end portions (the contact portions 28) of each block 20 on both sides thereof in the belt width direction are each formed by the resin portion 29 (i.e., formed by a phenol resin). The modulus of elasticity of the resin portion 29 at room temperature is, for example, 9000 MPa or more, or the like.

Moreover, in each block 20, the contact portions (opposite end portions in the belt width direction) each have the contact surface to be in contact with the pulleys. Specifically, the contact portions 28 are formed by protruding portions located at opposite end portions of the block 20 in the width direction, the tip surface of each protruding portion forming the contact surface 30. Note that the protruding portion is formed so that the dimension thereof in the thickness direction in the cross section parallel to the pulley groove surface is generally constant in the direction perpendicular to the pulley groove surface.

As shown in FIG. 3, each block 20 has a slope 31 that is continuous with the belt inner side of the contact surface 30 and inclined toward the center in the belt width direction with respect to the contact surface 30. That is, the contact surface 30 and the slope 31 together form a belt inner side corner portion (hereinafter referred to also as an "inner corner portion") 32 of the contact portion 28.

Now, if the angle α of the slope 31 with respect to the contact surface 30 of the block 20 is smaller than 120 degrees, the strength of the inner corner portion 32 is relatively low. Then, if the angular relationship between the contact surface 30 and the pulley groove surface is changed by the block 20 tilting even slightly, the shock resistance of the block 20 will be lowered, and the inner corner portion 32 is more likely to chip off by the shock caused when the block 20 enters the pulleys.

On the other hand, if the angle α of the slope 31 with respect to the contact surface 30 of the block 20 is larger than 140 degrees, the dimension of the block 20 increases in the belt thickness direction toward the center in the belt width direction. Therefore, the area of the contact surface 30 on the belt inner side of the block 20 increases through the wear of the contact surface 30 as the belt runs. The increase in the area of the contact surface 30 increases the speed difference between the belt inner side and the belt outer side of the contact surface 30 with respect to the pulley groove surface, thereby increasing the noise of the belt running.

In view of this, for the V-belt B of the present embodiment, the angle α of the slope 31 with respect to the contact surface 30 is set to 120 degrees or more and 140 degrees or less. Particularly, in order to further improve the strength of the inner corner portion 32, the angle α of the slope 31 with respect to the contact surface 30 is preferably 130 degrees or more and 140 degrees or less.

The outer beam portion 21 and the inner beam portion 22 are each formed so that the dimension thereof in the belt width direction decreases from the belt outer side toward the belt inner side. The outer beam portion 21 and the inner beam portion 22 are formed so that the angle (belt angle) β between the contact surfaces 30 is equal to the angle between the pulley groove surfaces of V-pulleys (not shown) around which the V-belt B is wrapped.

The block 20 includes a convex portion 33 formed to protrude from one surface thereof in the belt length direction, and a concave portion (not shown) formed on the other surface thereof in the belt length direction which is engaged with the convex portion 33 of an adjacent block 20. The concave portion and the convex portion 33 are formed along the pitch line of the center pillar portion 23.

The concave portion is formed with an arc-shaped cross section and is formed in a tapered shape such that the inner diameter thereof gradually decreases toward the bottom surface side. On the other hand, the convex portion 33 is formed with an arc-shaped cross section and is formed in a tapered shape such that the outer diameter thereof gradually decreases toward the tip side.

In the V-belt B, the convex portion 33 of one of blocks 20 adjacent to each other in the belt length direction is engaged with the concave portion of the other block 20, thereby restricting the shaking of the blocks 20 in the belt thickness direction and the belt width direction. Thus, the high-load drive V-belt B provides power transmission, with the block 20 receiving the rotational force of the pulley at the contact surface 30 and transferring it as a driving force to the tension band 10.

### Advantages of the Embodiment

Therefore, according to this embodiment, in the block 20 of the high-load drive V-belt B, the angle α of the slope 31 with respect to the contact surface 30 (the angle of the inner corner portion 32) is 120 degrees or more and 140 degrees or less. Therefore, it is possible to suppress the increase in the contact surface 30 on the belt inner side of the block 20 through the wear of the contact surface 30, and to improve the strength of the inner corner portion 32. That is, by suppressing the increase in the contact surface 30 as compared with the conventional configuration, as described above, it is possible to reduce the noise of the belt running. By improving the strength of the inner corner portion 32, it is possible to improve the shock resistance of the block 20 and the durability of the belt.

Moreover, since the angle α of the slope 31 with respect to the contact surface 30 is 130 degrees or more and 140 degrees or less, it is possible to further improve the strength of the inner corner portion 32 and to further increase the shock resistance of the block 20.

### Other Embodiments

In the above embodiment, the contact portions 28 are formed by protruding portions located at opposite end portions of the block 20 in the width direction. However, the present invention is not limited thereto, and the opposite end portions of the block main body (the block 20 without the protruding portions) in the width direction may be used as the contact portions 28 without providing the protruding portions.

In the above embodiment, the V-belt B includes a pair of tension bands 10. However, the present invention is not limited thereto, and it is only required that the V-belt B includes at least one tension band 10.

In the above embodiment, the modulus of elasticity of the resin portion 29 at room temperature is 9000 MPa or more. However, the present invention is not limited thereto, and the modulus of elasticity of the resin portion 29 may be smaller than 9000 MPa.

### Examples

### First Example

In the first example, high-load drive V-belts B of Examples 1-4 were produced, each having such a structure as shown in the above embodiment, and each V-belt B or the block 20 thereof was subjected to a block lateral pressure resistance test, a noise property test and a high-speed durability test.

In the V-belts B of Examples 1-4, the belt width was set to 25 mm and the belt length to 612 mm. The belt angle β of each belt was set to 26 degrees. The block 20 of each of these belts had a thickness of 2.95 mm, and was formed by an insert molding process using the reinforcing member 27 having a thickness of 2 mm. The blocks 20 were arranged at a pitch of 3 mm in the belt length direction. The angle α of the slope 31 with respect to the contact surface 30 (the angle of the inner corner portion 32) was set to 120 degrees, 125 degrees, 130 degrees and 140 degrees for Examples 1-4, respectively.

In Comparative Examples 1-3, in comparison with Examples 1-4, V-belts were produced of which the angle α of the slope 31 with respect to the contact surface 30 was different from those of Examples 1-4, and subjected to similar tests to those for the V-belts B of Examples 1-4. Note that in the following description, like reference numerals to those of Examples 1-4 will be used for the V-belts of Comparative Examples 1-4 for ease of understanding.

The angle α of the slope 31 with respect to the contact surface 30 is 103 degrees, 118 degrees and 145 degrees for the V-belts of Comparative Examples 1-3, respectively, and the configuration otherwise is similar to the V-belts B of Examples 1-4.

Next, the test apparatuses and the test methods for the block lateral pressure resistance test, the noise property test and the high-speed durability test will be described.

In the block lateral pressure resistance test, the lateral pressure resistance was measured for each of the blocks 20 of the V-belts of Examples 1-4 and Comparative Examples 1-3 by using a lateral pressure resistance test apparatus.

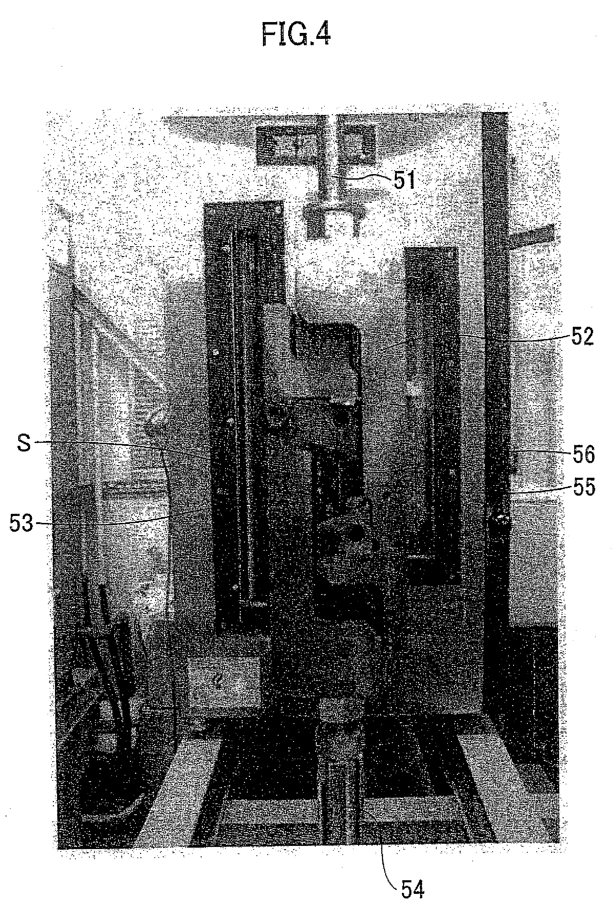

As shown in FIG. 4, the lateral pressure resistance test apparatus includes a load cell (not shown), a pillar-like portion 51 one end of which is connected to the load cell, a first pressurizing section 52 of a generally inverse C-letter shape connected to the other end of the pillar-like portion 51, a second pressurizing section 53 of a generally C-letter shape engaged with the first pressurizing section 52, and a pillar-like portion 54 one end of which is connected to one side of the second pressurizing section 53 that is opposite to the load cell.

With such a configuration, a block placement area S, in which the block 20 is placed, is formed between the first pressurizing section 52 and the second pressurizing section 53. The lateral pressure resistance test apparatus is configured so that the block 20, placed in the block placement area S, is pressurized by pulling the second pressurizing section 53 in the direction opposite to the load cell. That is, the lateral pressure resistance test apparatus is configured so that with the first pressurizing section 52 and the second pressurizing section 53 being in contact with the opposite side surfaces (the contact surfaces 30) of the block 20, the opposite side surfaces of the block 20 are pressurized by the first pressurizing section 52 and the second pressurizing section 53 by moving the second pressurizing section 53 in the direction opposite to the load cell, so as to measure the pressure applied to the block 20 by means of the load cell.

The first pressurizing section 52 and the second pressurizing section 53 are configured so that the angle of surfaces 55 and 56 in contact with the contact surface 30 with respect to the contact surface 30 of the block 20 (hereinafter referred to as the "contact surface contacting angle difference") can be adjusted to an angle such that the angle between the surfaces 55 and 56 is larger than the belt angle β.

That is, a state where the contact surface contacting angle difference is 0.0 degree is a state where the angle between the surfaces 55 and 56 of the first pressurizing section 52 and the second pressurizing section 53 in contact with the contact surface 30 is equal to the belt angle β, and a state where the contact surface contacting angle is larger than 0.0 degree is a state where the angle between the surfaces 55 and 56 is larger than the belt angle β. Therefore, as the contact surface contacting angle is larger, the first pressurizing section 52 and the second pressurizing section 53 contact the block 20 so that the surfaces 55 and 56 form an angle that is larger than the belt angle β, and therefore the inner corner portion 32 located on the belt inner side is more pressurized by the first pressurizing section 52 and the second pressurizing section 53.

With the lateral pressure resistance test apparatus having such a configuration, the maximum pressure applied to the contact surface 30 until the contact portion 28 of the block 20 chips off was measured as the block lateral pressure resistance. Note that the block lateral pressure resistance test of the present example was conducted under a room temperature condition with the speed at which to pull the second pressurizing section 53 being set to 0.5 mm per minute, wherein the lateral pressure resistance of the block 20 was measured for contact surface contacting angle differences of 0.0 degree, 0.5 degree, 1.0 degree, 1.5 degrees and 2.0 degrees.

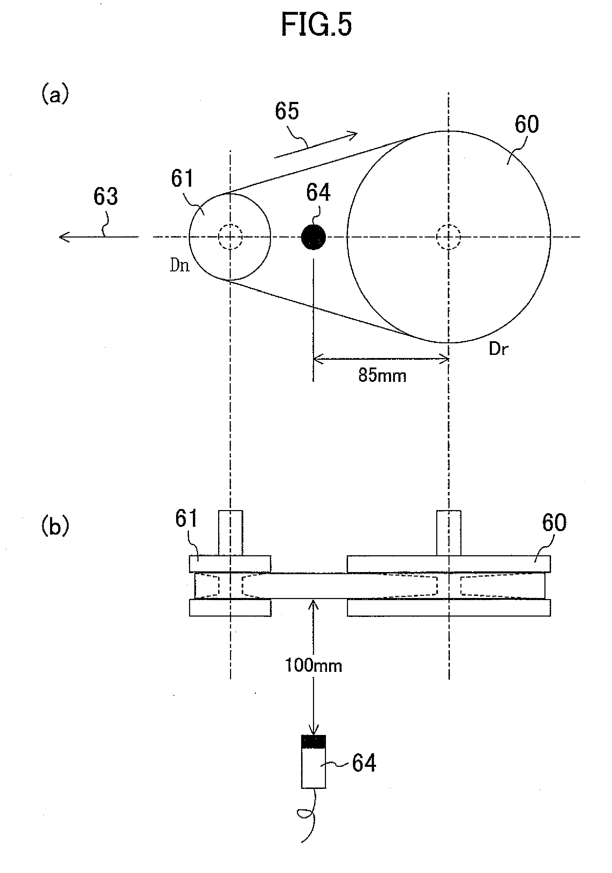

In the noise property test, each V-belt was wrapped around a pair of pulleys and allowed to run over 300 hours, after which the belt was stopped and taken off, and then the belt was allowed to run in a noise test apparatus to measure the noise. Moreover, for each belt, the noise during the belt run was measured by the noise test apparatus in advance before the belt was allowed to run over 300 hours. FIG. 5(a) is a diagram showing the noise test apparatus as viewed from the front side, and FIG. 5(b) is a diagram showing the noise test apparatus as viewed from above.

As shown in FIG. 5, the noise test apparatus includes a drive pulley 60 having a diameter of 130.64 mm provided on the drive shaft, and a driven pulley 61 having a diameter of 65.32 mm provided on the driven shaft. Each V-belt is wrapped around the pulleys 60 and 61, and the drive pulley 60 is spun at 0-3000 rpm and the driven pulley 61 at 0-6000 rpm with the axial load of the driven shaft being set to 3923 N by moving the driven shaft in the direction (reference numeral 63 of FIG. 5(a)) opposite to the drive shaft. Reference numeral 65 of FIG. 5(a) denotes the belt traveling direction. Then, the noise of the belt running was measured by a noise meter 64 positioned 85 mm away from the center of the drive shaft and 100 mm away sideways from the pulleys.

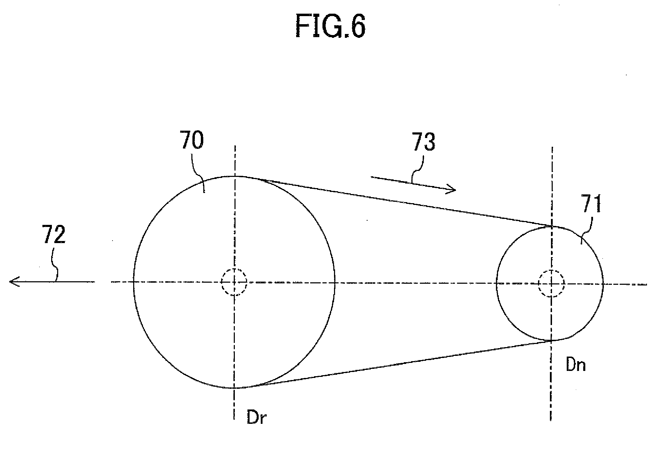

As shown in FIG. 6, in the high-speed durability test, each V-belt was wrapped around the drive pulley 70 and the driven pulley 71, and the belt was allowed to run over 350 hours with the axial load of the drive shaft being set to 2246 N by moving the drive shaft in the direction (reference numeral 72 of FIG. 6) opposite to the driven shaft, wherein the amount of time over which each belt was able to run was measured as the high-speed endurance lifetime. Reference numeral 73 of FIG. 6 denotes the belt traveling direction.

In the high-speed durability test, the pulley diameter of the drive pulley 70 is 133.5 mm, and the pulley diameter of the driven pulley 71 is 61.4 mm. The number of revolutions of the drive pulley 70 was set to 5016 rpm, and the torque of the drive pulley 70 to 63.7 N·m. The atmospheric temperature during the test was set to 105°C-120°C.

Each of the V-belts of Examples 1-4 and Comparative Examples 1-3 was allowed to run over 300 hours, after which the increment in the length of the contact surface 30 in the groove depth direction along the pulley groove surface (hereinafter referred to as the "contact surface increment") was measured.

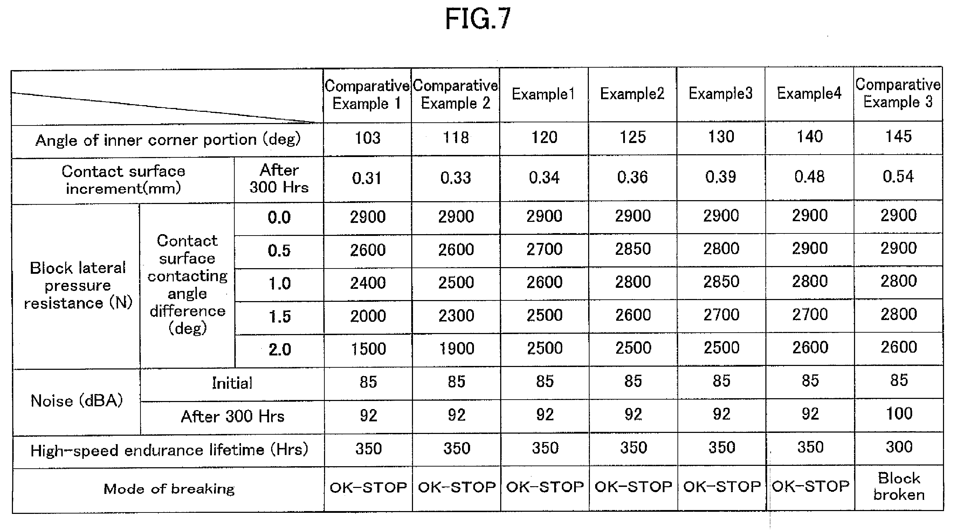

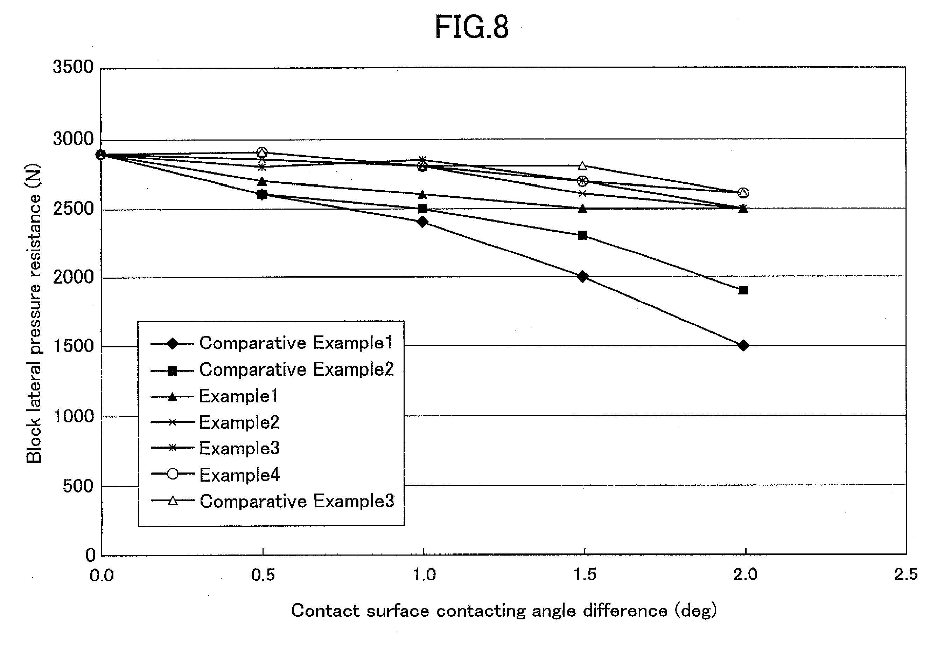

FIGS. 7 and 8 show the results of the block lateral pressure resistance test, the noise property test and the high-speed durability test for the V-belts of Examples 1-4 and Comparative Examples 1-3, and the results of measuring the contact surface increment for these belts. Specifically, FIG. 7 shows the results of the block lateral pressure resistance test, the noise property test and the high-speed durability test, and the results of measuring the contact surface increment for each belt. FIG. 8 is a graph showing the results of the block lateral pressure resistance test.

For the blocks 20 of Comparative Example 1 and Comparative Example 2, the contact surface increment was relatively small, but the block lateral pressure resistance in the block lateral pressure resistance test decreased relatively significantly as the contact surface contacting angle difference increased. For Comparative Example 3, the contact surface increment was relatively large and a higher level of noise was measured in the noise property test as compared with other V-belts (Examples 1-4, Comparative Example 1 and Comparative Example 2). Moreover, in the high-speed durability test, the block 20 broke at a running time of 300 hours.

In contrast, for the V-belts of Examples 1-4, the contact surface increment was relatively small, and the decrease in the block lateral pressure resistance in the block lateral pressure resistance test was relatively small as the contact surface contacting angle difference increased. In addition, in the noise property test, no substantial change was measured before and after the run, and the belts ran with no problems in the high-speed durability test over 350 hours.

Particularly, for Example 3 and Example 4, the decrease in the block lateral pressure resistance was small as the contact surface contacting angle difference increased in the block lateral pressure resistance test, as compared with Example 1 and Example 2.

It was found from the above that by setting the angle α of the slope 31 with respect to the contact surface 30 to 120 degrees or more and 140 degrees or less, it is possible to reduce the noise of the belt running and to improve the shock resistance of the block 20 and the durability of the belt. In particular, it was found that by setting the angle α of the slope 31 with respect to the contact surface 30 to 130 degrees or more and 140 degrees or less, it is possible to further improve the shock resistance of the block 20.

### INDUSTRIAL APPLICABILITY

As described above, the present invention is useful as a high-load drive V-belt, and is particularly suitable for improving the shock resistance of the block while reducing the noise of the belt running.

## Claims

1. A high-load drive V-belt comprising:
at least one tension band extending in an endless loop; and
a plurality of blocks engaged and secured to the tension band at a predetermined pitch in a belt length direction of the tension band, wherein
each of the plurality of blocks includes a contact surface to be in contact with a pulley on each of opposite end portions of the block in a belt width direction,
each of the plurality of blocks includes a slope formed so as to be continuous with a belt inner side of the contact surface and inclined toward a center in the belt width direction with respect to the contact surface, and
an angle of the slope with respect to the contact surface is 120 degrees or more and 140 degrees or less.

2. The high-load drive V-belt of claim 1, wherein the angle of the slope is 130 degrees or more and 140 degrees or less.

3. The high-load drive V-belt of claim 1, wherein the opposite end portions in the belt width direction of each of the plurality of blocks are formed by a phenol resin.
